Europäisches Patentamt

European Patent Office

Office européen des brevets

(11) Publication number: 0 605 847 A1

# EUROPEAN PATENT APPLICATION

(21) Application number: 93120760.9

(51) Int. Cl.5: **G01D 5/48**, G01D 5/245

(22) Date of filing: **23.12.93**

(30) Priority: **05.01.93 US 771**

(43) Date of publication of application:
**13.07.94 Bulletin 94/28**

(84) Designated Contracting States:
**DE FR GB IT**

(71) Applicant: **MOTOROLA, INC.**
**1303 East Algonquin Road**
**Schaumburg, IL 60196(US)**

(72) Inventor: **Lester, Theodore V.**
**10101 Wehrman Place**
**Schiller Park, Illinois 60176(US)**

Inventor: **Malone, Hugh R.**
**5101 East Mulberry**
**Phoenix, Arizona 85018(US)**
Inventor: **Meverhoff, Jerry**
**430 Weidner Road**
**Buffalo Grove, Illinois 60089(US)**

(74) Representative: **Hudson, Peter David et al**
**MOTOROLA**
**European Intellectual Property Operations**
**Jays Close**
**Viables Industrial Estate**
**Basingstoke, Hampshire RG22 4PD (GB)**

(54) **Electromagnetic wave reflectivity sensor.**

(57) An electromagnetic wave reflectivity sensor is constructed using an oscillator (105), preferably tuned within the microwave spectrum. The oscillator (105) provides a radiating wave whose frequency influenced by an impedance within a field. This impedance is influenced by a vector sum of the radiating wave and a reflected wave. The reflected wave has a magnitude and phase responsive to a reflection characteristic of a target (101). A frequency detection device (107, 109, 111; 115, 121) is coupled to the oscillator (105). The frequency detection device (107, 109, 111; 115, 121) provides an output (113;127), responsive to a change in the frequency of the oscillator (105), corresponding to a change the load impedance caused by a reflection of the radiating wave from the to be provided target (101) located within the field. This sensor can be used to construct either a one-state or multi-state absolute or incremental encoder.

## FIG.1

EP 0 605 847 A1

Field of the Invention

This invention is generally directed to the field of encoders and particularly to the field of electromagnetic wave sensors operating on a principal of sensed reflectivity. These devices may be applied to construct incremental, multi-state, or absolute position encoders and also proximity and wheel position, or speed sensors.

Background of the Invention

There are many types of sensing technologies that are applied to construct a wide variety of encoders. Each of these technologies have limitations inherent their basic architecture. Encoders come in many forms, the one-state encoder also generally known as a proximity switch, the two-state encoder, or incremental encoder, also referred to as a quadrature encoder when implementing direction sensing, and the multi-state or absolute encoder.

Technology for one and two-state encoders include killed oscillator eddy-current sensors, variable reluctance sensors, Hall-effect sensors, reflective optical sensors, metal detectors, and microwave sensors.

The eddy-current sensors are limited to applications that rely on a very large change in field disturbance to kill an oscillator. These killed oscillator circuits require large changes in reactance. This means that the size of the detected target needs to be large, thus yielding a coarse resolution system.

The variable reluctance sensors, are typically used to sense a toothed, or binarily arranged, metallic wheel for sensing rotary position, or speed. These sensors are very sensitive to the gap distance between the teeth on the wheel and the sensor both at installation and in field with road and suspension vibration and shock. Also, as the speed, or rotational velocity changes the voltage output from these sensors varies. For instance, in an automotive application, when sensing wheel speeds between 20 miles per hour and 55 miles per hour the sensor may output a periodic voltage ranging from 10 mv to 100 volts. This makes the interfacing electronics both difficult to design, and complex. Further, with automotive suppliers converting anti-skid braking systems to include traction control function, these sensors need to work at much lower speeds than 20 miles per hour. Building a variable reluctance sensory system for detecting speeds at less than 20 miles per hour is unreliable because the signal gets too small.

Hall-effect sensors are also sensitive to the gap between the target and the sensor and have a limited temperature operating range. Also these sensors rely on a gross change in a polarity of a magnetic field. This means that the target is typically limited to a magnetic material. This makes the target both expensive, and due to the composition of the magnetic material, unreliable at high rotary speeds and high operating temperatures.

Reflective optical sensors are generally fragile, are limited to a medium temperature range, have a medium resolution, and need relatively clean environment to operate reliably.

Metal detectors, that detect a shift in frequency, are used to detect large targets introduced into a radiating field based on a change in inductance attributable to permittivity, or permeability due to a permeable target intruding this field. This type of sensor technology is only suited to constructing very simple low resolution encoders because of the relatively large target needed to significantly shift the oscillator frequency.

Current microwave sensors fall primarily into two categories, those that work on a Doppler shift principle, and those that work on a gross change in reactance. The Doppler shift sensors are normally used to measure the speed of a passing object. Although they may be adapted in a one or two-state encoder they are expensive and complex, thereby less reliable than other, simpler approaches. The other major type of microwave based sensors look for a major change in an oscillator's reactive field by introducing a reactive target within the field, thereby killing, or starting the oscillator. This scheme, like others described before is limited to sensing large changes in reactance. This means, for the case of a two-state encoder, the difference between the sensed object and the counterpart non-sensed object must be substantial. This means this prior art scheme is limited in its ability to construct medium and high resolution sensors.

Technology for multi-state sensors include resolvers, and optical encoders.

Resolvers are plagued by high cost, large physical size, must be directly coupled to the measured device, and they require very complex electrical interfaces to work.

Optical encoders are limited in resolution, fragile, and have poor high temperature performance.

What is needed is an improved sensor that is less dependent on target-to-sensor gap, easier to install, is more reliable, is easier to interface to, is robust, operates at high temperatures, and has the capability to absolute encode multiple states with high resolution.

Brief Description of the Drawings

FIG. 1 is a system block diagram in accordance with the invention;
FIG. 2 is a component level drawing illustrating several key components as described in a preferred embodiment;
FIG. 3 shows a wheel having alternating spaces and marks each having a different reflectivity based on physical dimensions;
FIG. 4 shows an alternative wheel having alternating spaces and marks each having a different reflectivity based on material selection;
FIG. 5 shows a wheel having alternating spaces and marks and a special mark having a different reflectivity characteristic;
FIG. 6 shows a wheel having a monotonically changing reflectivity characteristic;
FIG. 7 shows a sphere with a hemisphere coated with a monotonically changing reflectivity characteristic;
FIG. 8 shows a surface that exhibits a high reflectivity characteristic;
FIG. 9 shows a surface that exhibits a monotonically changing reflectivity characteristic along a linear path; and
FIG. 10 shows a surface that exhibits a monotonically changing reflectivity characteristic diverging from a center point along a bilateral linear path.

Detailed Description of a Preferred Embodiment

An electromagnetic wave reflectivity sensor is constructed using an oscillator, preferably tuned within the microwave spectrum. The oscillator provides a radiating wave at a frequency influenced by a load impedance within a field. The load impedance within the field is influenced by a vector sum of the radiating wave and a reflected wave. The reflected wave has a magnitude and phase responsive to a reflection characteristic of a to be provided target. A frequency detection device, preferably a frequency to voltage converter, with a level comparator, is coupled to the oscillator. The frequency detection device provides an output responsive to a change in the frequency of the oscillator, corresponding to a change the load impedance caused by a reflection of the radiating wave from the to be provided target located within the field. This sensor, constructed with the appropriate target and frequency detection devices, can be used to construct either a one-state, two-state, or multi-state absolute or incremental encoder.

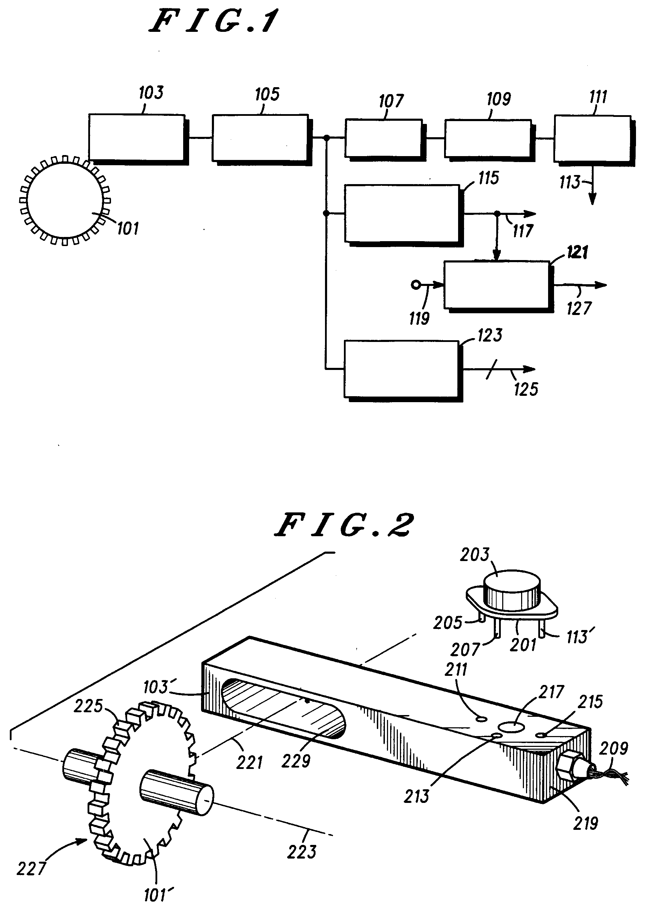

FIG. 1 shows a system block diagram of the sensory system including provision for several embodiments.

In a preferred embodiment an automotive wheel position, or speed sensor is constructed. This sensor may be attached to a vehicular wheel component that rotates as the vehicle traverses. A toothed wheel 101 has alternately disposed marks and spaces along a continuous circumferential surface of the wheel. The marks have a first characteristic spectral reflectivity to a predetermined frequency, preferably in the microwave frequency range, and the spaces have a second characteristic spectral reflectivity to the predetermined frequency. This toothed wheel 101 may be constructed several ways, as detailed later. Preferably, all embodiments of this wheel have at least a mark and a space having different reflectivity coefficients in the microwave frequency range. Generally the microwave band is considered to extend from about 1 GHz to 40 GHz and covers the L-Band to the KA-Band. Of course, other frequency bands across the electromagnetic spectrum may be used with appropriately sized elements.

An antenna means, in this case a coupler-resonator 103 is located opposite the toothed wheel 101.

A microwave, or KU-Band, oscillator 105 is coupled to the coupler-resonator 103. The combination of the KU-Band oscillator 105, and the coupler-resonator 103 provide a radiating wave that emanates at a frequency influenced by a load impedance within a field. The load impedance is influenced by a characteristic impedance of free space within the field. A shift in the frequency occurs responsive to a change in the load impedance corresponding to a vector bum of the radiating wave and a reflected wave. The reflected wave has a magnitude and phase responsive to a reflectivity of the radiating wave from either the space or the mark.

A frequency shift detector comprised of a filter 107, a detector 109, and a current switch 111, provide a output 113 responsive to a shift in the predetermined frequency of the KU-Band oscillator 105 corresponding to the changing reflectivity of the toothed wheel 101 as the wheel 101 rotates exposing either a space or a mark to the field. The filter 107 is designed to pass the oscillator's 105 frequency when a mark is in the field and will not pass the oscillator's frequency when a space is in the field. As the target wheel rotates this results in a constant peak amplitude periodic wave at the output 113 of the current switch 111. This provides a substantial advantage over the variable reluctance type wheel speed sensor because the output's 113 voltage is no longer dependent on wheel speed.

FIG. 2 is a component level drawing further detailing several key components used in the preferred embodiment. Element 103' is a waveguide that represents the physical embodiment of the coupler-resonator from FIG. 1. Of course, those skilled in the art will recognize other, equivalent, structures such as a strip line or other antenna structures to substitute for the waveguide 103'.

Element 203 comprises the KU-Band oscillator 105, the filter 107, the detector 109, and the current switch 111 all from FIG. 1, in an electronic package. This component 203 is constructed using a Gallium Arsenide Monolithic Microwave Integrated Circuit, or GaAs MMIC, technology. In this case it's tuned to approximately 18 GHz. Other frequencies may be used depending on the target, and waveguide, or antenna 103', design. The application of this technology allows for a very small, cost efficient package. GaAs technology inherently operates at a higher temperature than conventional silicon devices, making it well suited for the extreme temperature range found in the automotive environment. When onserted to the waveguide 103', power 205, ground 207, and output 113' pins protrude through the corresponding holes 211, 213, and 215. And an output of the KU-Band oscillator 105 is coupled between an output port 201 and a port 217 on the waveguide 103'.

A connector 219, and wires 209 are provided on the side of the waveguide 103' to supply power, ground and output connections to the corresponding pins 205, 207, and 113' on the MMIC 203.

When the MMIC 203 is powered it emits energy through port 201 to port 217 at about 18 GHz. This energy is coupled along the interior of the waveguide 103' to an emissions port 229 where a field is created. This field is emitted in a complex geometric pattern dependent on the actual oscillator 105 frequency and the structure of the antenna 103'. For purposes of illustration a center line 221 is used to represent a portion of this field.

As mentioned earlier, the toothed wheel 101' comprises a wheel having a predetermined circumference, with a multiplicity of marks 225, in this case a metal material. These marks exhibit a first characteristic reflectivity. These marks 225, are located interdigitated with a corresponding multiplicity of spaces 227, located with a distinct difference in distance from the oscillator means, 203, 103' and exhibiting a substantially different second reflectivity.

As the toothed wheel 101' rotates about a reference axis 223 the load impedance that the oscillator 105 sees, changes. As mentioned earlier, the load impedance within the field is influenced by a vector sum of the radiating wave and the reflected wave. The reflected wave has a magnitude, or amplitude and phase responsive to a reflection characteristic of a to be provided target, in this case the toothed wheel 101'. The change in load impedance can be modeled using the following deterministic relationship:

**EQUATIQN 1**

$$\Delta Z_L = Z_O \times (\rho_1 - \rho_2)$$

where:

$\Delta Z_L$ = change in load impedance
$Z_O$ = output characteristic impedance
$\rho_1$ = complex ratio of the reflected signal to the radiated signal for a mark
$\rho_2$ = complex ratio of the reflected signal to the radiated signal for a space

Correspondingly, this shift in load impedance will cause the frequency of the oscillator 105 to change according to the following equation:

**EQUATION 2**

$$\Delta F = \frac{2 \times F_O \times (\rho_1 - \rho_2)}{Q_{ex}}$$

where:

$\Delta F$ = change in oscillator frequency

$F_O$ = nominal oscillator frequency

$\rho_1$ = complex ratio of the reflected signal to the radiated signal for a mark

$\rho_2$ = complex ratio of the reflected signal to the radiated signal for a space

$Q_{ex}$ = external "Q" of the oscillator

The reflectivity of the mark or space is based on an amplitude and phase of a reflected wave. For the preferred embodiment a target is provided that exhibits a large change in phase based on a significant difference in the height between spaces and marks. Another target embodiment is presented later with a surface that yields a significant difference in amplitude of the reflected wave between the spaces and marks. Either amplitude or phase and the combination may be used to build an adequate target.

This approach, of measuring reflectivity, offers a significant advantage over killed oscillator eddy current sensors, killed oscillator microwave proximity sensors, and variable reluctance based approaches because a very small change in reflectivity will produce a corresponding change in oscillator frequency. This allows construction of a very high resolution sensor. There are many approaches for detecting this change in frequency. This also makes the target design much easier. Additionally, this approach is substantially less sensitive to air gap tolerances, and the peak amplitude of the periodic voltage at output 113, is substantially independent of wheel speed. These advantages eliminate the low speed sensing problems of the variable reluctance sensors, allowing application to traction control systems that need to sense very low wheel speeds.

Also, as described in alternative embodiments later, multi-state encoders can be easily constructed using this reflectivity sensor.

There are many different target designs that may be used to construct a wheel position, or speed sensor.

FIG. 3 shows another view of the wheel 101' illustrated in FIG. 2. This wheel 301 has alternating spaces and marks each having a different reflectivity based on physical dimensions. The different reflectivities are caused by a distinct difference in distance between the mark 303 and the space 305, when compared to the distance between the wheel 301 and the oscillator means 103' 203. In this case the teeth, or marks, are constructed of metal, forged into a wheel. The intervening spaces are simply voids. Preferably, the target surfaces have a 1/4 wavelength reflectivity relationship between the marks and spaces.

As mentioned earlier, the magnitude of the reflected signal depends on the distance from either the mark or space to the radiating source. The phase of the reflected signal also depends on the distance from either the mark or space to the radiating source. The difference in phase of the reflected signal is two times the electrical length of the mark or space height. This electrical length can be expressed in degrees using the following equation.

**EQUATION 3**

$$\Delta\phi = 2 \times L_e = \frac{2 \times d \times F \times 360°}{C}$$

where:

$\Delta\phi$ = phase difference

$L_e$ = electrical length

$d$ = height of mark or space

$F$ = frequency of oscillator means

$C$ = speed of light

FIG. 4 shows an alternative wheel 401. This wheel 401 uses two different materials to represent the marks and spaces and functions very much like the previous target wheel 301. This wheel 401 has a predetermined circumference, with a multiplicity of a first material 403 with a first reflectivity located on the circumferential surface of the wheel. This material 403 is interdigitated with a corresponding multiplicity of a second material 405 with a substantially different second reflectivity. Many different combinations of materials can be successfully applied to construct an appropriate target wheel. These include microwave absorbing material, interdigitated with microwave reflective material. Those skilled in the art will recognize many other substantially equivalent pairs of materials that will perform as well. Preferably, when constructing an incremental encoder, such as a wheel position or speed sensor, the target reflectivity (through distance and/or treatment) is optimized to have a 1/4 wavelength change in reflectivity between the marks and spaces. For this case a dielectric constant of the material may need to be considered if a non-metallic mark or space is used. The phase difference is computed for the case of metal marks and spaces filled with a non-metallic material as follows.

**EQUATIQN 4**

$$\Delta\phi = 2 \times L_e = \frac{2 \times d\, F \times e \times 360°}{C}$$

where:

$\Delta\phi$ = phase difference
$L_e$ = electrical length
$d$ = height of mark or space
$F$ = frequency of oscillator means
$C$ = speed of light
$e$ = relative dielectric constant of space material between the metal teeth ($e = 1$, for air)

For the case of a target composed of two non-metallic materials the phase difference must include the dielectric constant of both materials. The electrical length in degrees for this case is calculated as follows.

**EQUATIQN 5**

$$\Delta\phi = 2 \times L_e = \frac{2 \times d \times F \times 360°}{C} \times (e_1 - e_2)$$

where:

$\Delta\phi$ = phase difference
$L_e$ = electrical length
$d$ = height of mark or space
$F$ = frequency of oscillator means
$C$ = speed of light
$e_1$ = higher of dielectric constants of the non-metallic materials
$e_2$ = lower of dielectric constants of the non-metallic materials

Note that the two materials used in the previous example may have either two different reflectivities or a high reflectivity and a high absorption characteristic. From the previous discussion it can be seen that the reflectivity, or phase difference depends on the physical height of the mark, or space, and the dielectric properties of the materials used. The following table illustrates various heights required to obtain 60°, 90°, 120°, 150°, and 180° of phase shift at 18 GHz.

TABLE 1

| PHASE DIFFERENCE | HEIGHT OF STEP IN INCHES FOR A DIELECTRIC CONSTANT | | | |
|---|---|---|---|---|
| | 1.0-air | 2.2- Teflon | 4.0-epoxy | 10-ceramic |
| 60° | 0.11 | 0.07 | 0.05 | 0.03 |
| 90° | 0.16 | 0.11 | 0.08 | 0.05 |
| 120° | 0.22 | 0.15 | 0.11 | 0.07 |
| 150° | 0.27 | 0.18 | 0.14 | 0.09 |
| 180° | 0.33 | 0.22 | 0.16 | 0.10 |

In target feature, mark or space, design it is important to understand the minimum width required. This is determined by a field of view of the antenna 103' The field of view is approximately equal to a size of the antenna 103' plus the region into which the antenna 103' radiates. For this antenna 103' structure the size of an aperture 229 is the size of importance. Antenna pattern calculations can be used to determine the angle of radiation coverage if the target 101' is in the far field of the antenna 103'. The far field of an antenna begins at a distance calculated as follows.

**EQUATIQN 6**

$$FD = \frac{F \times D^2}{5.9}$$

where:

FD = far field distance

F = frequency of oscillator in GHz

D = largest antenna dimension in inches

A quarter wave high aperture has about a +/- 45° field width. The data in the following table shows the calculated field of view for a quarter wave high aperture at several frequencies, shown in GHz, and spacing to the target wheel 101'. The far field condition is also included for each frequency. If the spacing is less than the far field, the actual field of view may be greater than the calculated value. For optimum operation, the field of view should be smaller than the size of a single tooth, however this is not an absolute limit.

TABLE 2

| frequency | 1/4 wave | far field | spacing from target wheel in inches | | | | |
|---|---|---|---|---|---|---|---|
| | | | 0.025 | 0.050 | 0.100 | 0.200 | 0.400 |
| 5 | 0.590 | 0.30 | 0.640 | 0.690 | 0.790 | 0.990 | 1.390 |
| 10 | 0.295 | 0.15 | 0.345 | 0.395 | 0.495 | 0.695 | 1.095 |
| 20 | 0.148 | 0.07 | 0.198 | 0.248 | 0.348 | 0.548 | 0.948 |
| 40 | 0.074 | 0.04 | 0.124 | 0.174 | 0.274 | 0.474 | 0.874 |
| 80 | 0.037 | 0.02 | 0.087 | 0.137 | 0.237 | 0.437 | 0.837 |

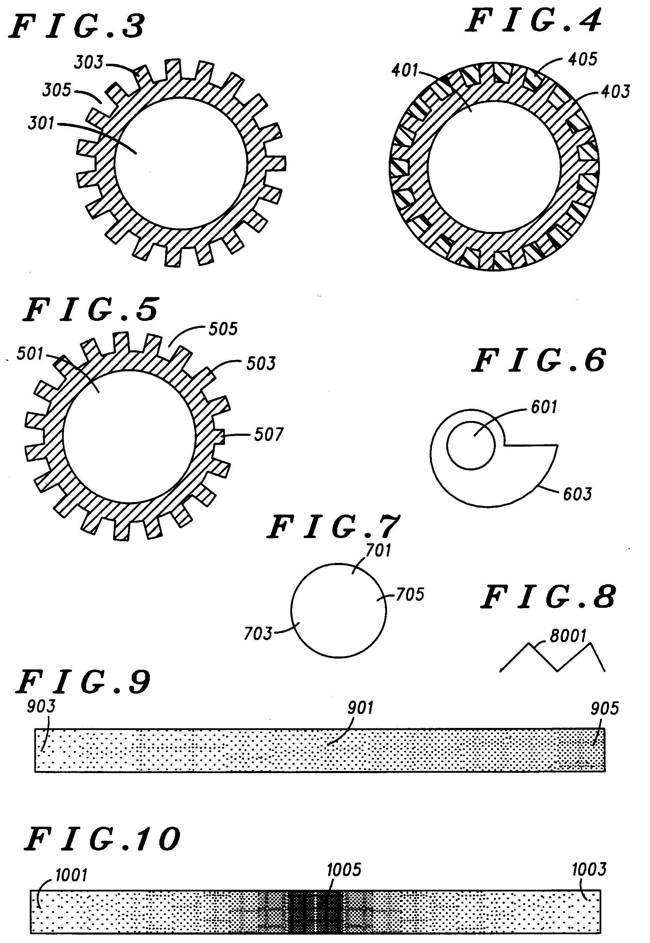

Another embodiment provides an incremental multi-state encoder. This is done with another target wheel, and additional frequency detection means added to the basic system. FIG. 5 shows a wheel 501 having alternating spaces 505 and marks 503 and a special mark 507 having a reflectivity characteristic substantially different than the marks 503 and spaces 505. In this case a mark, or tooth 507 is shown to have a different physical height than the mark, represented by 503. Of course, a different surface treatment on a tooth of the same height will work as well as long as the reflectivity at 18 GHz is substantially different than the spaces 505 or marks 503. Referring back to FIG. 1 a frequency to tri-state detection element consists of a frequency to voltage converter 115 and a voltage comparator 121. The frequency to voltage converter 115 output a voltage 117 that corresponds to the frequency of the KU-Band oscillator 105. The voltage comparator 121 compares this voltage 117 to a voltage threshold 119 and provides an output 127 activated when the voltage 117 exceeds the voltage threshold 119. This indicates that the special mark, or tooth 507 is intersecting the oscillator's field. This frequency to tri-state detection element 115, 121 is used to determine the substantially different mark 507. A three state encoder can be constructed using this frequency to tri-state detection element 115, 121 in tandem with elements 107, 109, and 111. Of course, those of ordinary skill in the art will recognize many other equivalent circuits and methods for achieving the detection of a particular shift in frequency.

In another embodiment an absolute multi-state position encoder is constructed. FIG. 6 shows a wheel 601 having a monotonically changing reflectivity characteristic. In this case the wheel is shown having a monotonically receding circumferential surface. Of course, other non-monotonic surface geometries may be used to encode non-linear motion. Returning to FIG. 1 a frequency to BCD, or Binary Coded Decimal converter 121 provides an output 119 having a multi-bit encoded digital word representing the reflectivity - thus the absolute rotary position of the target, in this case element 601 from FIG. 6. Of course, a binary, Gray code, or other encoding approach may be used. Various converters of frequency to another domain, be it voltage, a digital code, or other representation of the reflectivity can be easily added to the disclosed reflectivity sensory apparatus, with an appropriately designed target, to build encoders that measure absolute position within a few thousand parts without any special provisions.

In another example of a multi-state encoded target FIG. 7 shows a sphere 701 with a hemisphere coated with a monotonically changing reflectivity characteristic. Reference number 703 indicates a highly reflective area and reference number 705 indicates a far less reflective area. This target, coupled with the apparatus in 103, 105, and 121 in FIG. 1 will allow transformation from a spherical movement to an absolute position.

Target surfaces can exhibit different reflectivities to the KU-Band by distance differences, material differences and, as shown in FIG. 8 target surface treatment The surface geometry 801 has a highly reflective characteristic.

Another target embodiment illustrated in FIG. 9 shows a surface that exhibits a monotonically changing reflectivity characteristic along a linear path. Reference number 905 indicates a highly reflective area and reference number 903 indicates a far less reflective area. Alternatively, this treated surface may be disposed on a wheel, or other continuous geometric surface to construct an absolute position encoder.

FIG. 10 shows another surface that exhibits a monotonically changing reflectivity characteristic diverging from a center point along a bilateral linear path. Reference number 1005 indicates a highly reflective area and reference numbers 1001, and 1003 indicate substantially less reflective areas. This is an example of the flexibility of this approach. By designing the appropriate target, a linearization of any motion can be attained.

It should be noted that frequencies in the microwave range are preferable for constructing automotive wheel sensors and other encoders because of the requirement to make these devices relatively physically small. However, many other encoding, and sensing devices can be constructed using other parts of the electromagnetic spectrum with correspondingly sized oscillator, frequency detection, and target means.

Additionally, targets, other than solids may be used. These include liquids and gasses. For instance one may detect a change in humidity in a gas, the level of a liquid, or the thickness of ice on an airplane wing surface.

In conclusion an improved sensor has been detailed. It is less dependent on target-to-sensor gap, easier to install, is more reliable, is easier to interface to, operates at high temperatures, and has the capability to absolute encode analog or multi-states has been described. As a wheel speed sensor this apparatus allows significantly larger alignment tolerances and the constant output amplitude ensures that there is no lower limit on measurable wheel speed. As a multi-state absolute position encoder this apparatus is very flexible and includes the capability to convert non-linear motion to a linearly encoded output. Also, using this apparatus, very high resolution absolute encoders can be constructed.

## Claims

1. An electromagnetic wave reflectivity sensor comprising:

   oscillator means for providing a radiating wave at a frequency influenced by a load impedance within a field, wherein the load impedance within the field is influenced by a vector sum of the radiating wave and a reflected wave, and wherein the reflected wave has a magnitude and phase responsive to a reflection characteristic of a to be provided target; and

   frequency detection means, coupled to said oscillator means, for providing an output responsive to a change in the frequency of said oscillator means, corresponding to a change in the load impedance caused by a reflection of the radiating wave from said to be provided target located within the field.

2. A device in accordance with claim 1 wherein said to be provided target comprises a wheel having a predetermined circumference, and wherein a multiplicity of a first material having a first reflectivity is located on a circumferential surface of the wheel interdigitated with a corresponding multiplicity of a second material having a substantially different second reflectivity, and wherein in response to a rotation of said wheel about a reference axis, the frequency of said oscillator shifts when as the wheel rotates and it's circumferential surface transitions from aligning the first material within the field to aligning the second material within the field.

3. A device in accordance with claim 2 wherein the reflectivities are caused by a distinct difference in distance between the first material and said oscillator means, when compared to the distance between said oscillator means and the second material.

4. A device in accordance with claim 1 wherein said frequency detection means further comprises comparison means for providing an output having more than one-state, wherein one of the more then one-states of the output is provided responsive to a frequency shift provided by said frequency detection means.

5. A sensor in accordance with claim 4 wherein said to be provided target surface has a 1/4 wavelength reflectivity relationship between the first and second material.

6. A device in accordance with claim 1 wherein said oscillator means comprises a microwave oscillator coupled to an antenna.

7. A device in accordance with claim 1 wherein said to be provided target comprises a continuous surface having a monotonically gradient reflective surface.

8. An electromagnetic wave reflective sensor comprising:
   oscillator means for providing a radiating wave at an output, the radiating wave providing a field having a frequency determined by a load impedance within the field, wherein the load impedance is influenced by a vector sum of a radiating wave and a reflected wave, and wherein the reflected wave has a magnitude and phase responsive to a reflectivity of the radiating wave from a presence of a to be provided target having a predetermined reflectivity coefficient; and
   frequency shift detection means, coupled to the output of said oscillator means, for providing a output responsive to the frequency of said oscillator means, wherein an parameter of the output of said frequency shift detection means changes corresponding to a change in frequency of said oscillator means, responsive to a change in load impedance within the field caused by an introduction of said to be provided target having a predetermined reflectivity coefficient into the field.

9. A device in accordance with claim 8 wherein said to be provided target comprises a wheel having a predetermined circumference, and wherein a multiplicity of a first material having a first reflectivity is located on a circumferential surface of the wheel interdigitated with a corresponding multiplicity of a second material having a substantially different second reflectivity, and wherein in response to a rotation of said wheel about a reference axis, the frequency of said oscillator shifts when as the wheel rotates and it's circumferential surface transitions from aligning the first material within the field to aligning the second material within the field.

10. A device in accordance with claim 9 wherein the reflectivities are caused by a distinct difference in distance between said to be provided target and the first material compared to the distance between said to be provided target and the second material.

11. A sensor in accordance with claim 10 wherein said to be provided target surface has a 1/4 wavelength reflectivity relationship between the first and second material.

12. A device in accordance with claim 8 wherein said frequency shift detection means further comprises comparison means for providing an output having one of two-states, wherein one of the one of two-states of the output is provided responsive to a frequency shift provided by said frequency shift detection means.

**13.** A device in accordance with claim 8 wherein said oscillator means comprises a microwave oscillator coupled to an antenna.

**14.** A device in accordance with claim 13 wherein said antenna comprises a waveguide having an aperture for emitting the radiating field.

**15.** An electromagnetic wave reflective sensor for sensing a presence of a reflective target, said sensor comprising:

antenna means located opposite said reflective target;

a microwave oscillator, having an output coupled to said antenna means, said microwave oscillator for providing a radiating wave emanating from said antenna at a frequency influenced by a load impedance within a field, wherein the load impedance is influenced by a characteristic impedance of free space within the field, wherein a shift in the frequency occurs responsive to a change in the load impedance corresponding to a vector sum of the radiating wave and a reflected wave, and wherein the reflected wave has a magnitude and phase responsive to a reflectivity of the radiating wave from a presence of said reflective target within the field, and whereby the output is indicative of the frequency of said microwave oscillator; and

a frequency detector, coupled to the output of said microwave oscillator for providing an output signal having an amplitude corresponding to the reflectivity of said reflective target located within the field.

**16.** A device in accordance with claim 15 wherein said reflective target comprises a wheel having a predetermined circumference, and wherein a multiplicity of a first material having a first reflectivity is located on a circumferential surface of the wheel interdigitated with a corresponding multiplicity of a second material having a substantially different second reflectivity, and wherein in response to a rotation of said wheel about a reference axis, the frequency of said oscillator shifts when as the wheel rotates and it's circumferential surface transitions from aligning the first material within the field to aligning the second material within the field.

**17.** A device in accordance with claim 16 wherein the first and substantially different second reflectivities are caused by a distinct difference in distance between said wheel's first material and said antenna means compared to the distance between said wheel's second material and said antenna means.

**18.** A device in accordance with claim 17 wherein said frequency shift detection means further comprises comparison means for providing an output having more than one-state, wherein one of the more then one-states of the output is provided responsive to a frequency shift provided by said frequency shift detection means.

**19.** A sensor in accordance with claim 17 wherein said wheel surface has a 1/4 wavelength reflectivity relationship between the first and second material.

**20.** A device in accordance with claim 15 wherein said reflective target comprises a continuous surface having a monotonically gradient reflective surface.

**21.** A device in accordance with claim 15 wherein said reflective target comprises an target having distinct areas with substantially different reflective characteristics.

**22.** An absolute multi-state encoder comprising:

a target having a continuous surface with a reflective characteristic;

antenna means located opposite said target, said antenna means located aligned with respect to said target;

an oscillator, coupled to said antenna means for providing a radiating wave at a predetermined frequency influenced by a load impedance within a field, wherein the load impedance is determined by a characteristic impedance of free space within the field, wherein a shift in the predetermined frequency occurs responsive to a change in the load impedance corresponding to a vector sum of the radiating wave and a reflected wave, and wherein the reflected wave has a magnitude and phase responsive to a reflectivity of the radiating wave from a presence of said target within the field; and

frequency shift detection means for providing a output responsive to a shift in the predetermined frequency of said oscillator means corresponding to a provision of said target within the field.

23. A device in accordance with claim 22 wherein the target comprises a wheel having a predetermined circumference, and wherein a multiplicity of a first material having a first reflectivity is located on a circumferential surface of the wheel interdigitated with a corresponding multiplicity of a second material having a substantially different second reflectivity, and wherein in response to a rotation of said wheel about a reference axis, the frequency of said oscillator shifts when as the wheel rotates and it's circumferential surface transitions from aligning the first material within the field to aligning the second material within the field.

24. A device in accordance with claim 23 wherein one of said marks comprises a special mark having a substantially different characteristic spectral reflectivity to said frequency, and wherein said frequency shift detector further comprises a tri-state detector for indicating, at the output of said frequency shift detector a substantially different mark.

25. A device in accordance with claim 23 wherein said frequency shift detection means further comprises comparison means for providing an output having more than one-state, wherein one of the more then one-states of the output is provided responsive to a frequency shift provided by said frequency shift detection means.

26. A sensor in accordance with claim 23 wherein said wheel's surface has a 1/4 wavelength reflectivity relationship between the first and second material.

27. A device in accordance with claim 22 wherein the continuous surface of said target has a multiplicity of substantially distinct reflective surfaces.

28. A device in accordance with claim 22 wherein the output of said frequency shift detection means comprises means for providing a multiplicity of distinct states corresponding to the alignment of the target having the multiplicity of substantially distinct reflective surfaces within the field.

29. A device in accordance with claim 22 wherein the target comprises a sphere having a gradiently reflective surface located over a boundary comprising one hemisphere.

30. A microwave wheel position sensor comprising:
    a wheel having alternately disposed marks and spaces along a continuous circumferential surface of said wheel, wherein the marks have a first characteristic spectral reflectivity to a predetermined frequency and the spaces have a second characteristic spectral reflectivity to the predetermined frequency;
    oscillator means for providing a radiating wave at a predetermined frequency influenced by a load impedance within a field, wherein the load impedance is determined by a characteristic impedance of free space within the field, wherein a shift in the predetermined frequency occurs responsive to a change in the load impedance corresponding to a vector sum of the radiating wave and a reflected wave, and wherein the reflected wave has a magnitude and phase responsive to a reflectivity of the radiating wave from a presence of said wheel within the field; and
    frequency shift detector for providing a output responsive to a shift in the predetermined frequency of said oscillator means corresponding to a provision of said wheel within the field.

31. A device in accordance with claim 30 wherein one of said marks has a substantially different characteristic spectral reflectivity to said frequency, and wherein said frequency shift detector further comprises a tri-state detector for indicating, at the output of said frequency shift detector a substantially different mark.

# FIG.1

# FIG.2

*F I G . 3*

303
305
301

*F I G . 4*

401
405
403

*F I G . 5*

505
501
503
507

*F I G . 6*

601
603

*F I G . 7*

701
705
703

*F I G . 8*

8001

*F I G . 9*

903
901
905

*F I G . 1 0*

1001
1005
1003

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | EP-A-0 320 442 (SCHMALL)<br><br>* the whole document *<br>--- | 1,4,6,8,<br>12-15,22 | G01D5/48<br>G01D5/245 |
| A | EP-A-0 199 224 (JODON ENGINEERING ASSOCIATES)<br>* abstract *<br>----- | 1 | |

TECHNICAL FIELDS
SEARCHED      (Int.Cl.5)

G01D
G01B

The present search report has been drawn up for all claims

| Place of search | Date of completion of the search | Examiner |
|---|---|---|
| THE HAGUE | 22 March 1994 | Lloyd, P |

EPO FORM 1503 03.82 (P04C01)